# EUROPÄISCHE PATENTSCHRIFT

(11) **EP 2 406 838 B1**
(45) Veröffentlichungstag und Bekanntmachung des Hinweises auf die Patenterteilung: **12.06.2013**
(21) Anmeldenummer: 10703040.5
(22) Anmeldetag: 29.01.2010
(51) Int. Cl.: H01M 2/10, H01M 2/20, H01M 2/34, H01M 8/24, H01M 10/42

(54) **BATTERIESYSTEM MIT EINER AUSGANGSSPANNUNG VON MEHR ALS 60 V GLEICHSPANNUNG**
BATTERY SYSTEM HAVING AN OUTPUT VOLTAGE OF MORE THAN 60 V DIRECT CURRENT VOLTAGE
SYSTÈME DE BATTERIE AYANT UNE TENSION DE SORTIE SUPÉRIEURE À UNE TENSION CONTINUE DE 60 V

(30) Priorität: 12.03.2009 DE 102009001514
(43) Veröffentlichungstag der Anmeldung: 18.01.2012
(73) Patentinhaber: Robert Bosch GmbH, 70442 Stuttgart (DE)
(72) Erfinder: KRIEG, Berengar, 71229 Leonberg (DE)
(86) Internationale Anmeldenummer: PCT/EP2010/051073
(87) Internationale Veröffentlichungsnummer: WO 2010/102855

(56) Entgegenhaltungen:
- EP-A1- 1 047 138
- US-A- 5 886 501
- US-A1- 2006 255 764

## Beschreibung

### Stand der Technik

Der Umgang mit Baugruppen unterschiedlicher Spannung ist in entsprechenden Normen geregelt. Die Norm ISO 6469 unterscheidet zwischen Klasse A, für Spannungen von 0 bis 60 V Gleichspannung oder 0 bis 25 V für Wechselspannungen von 15 bis 150 Hz und Klasse B für Gleichspannung größer 60 V bis 1500 V oder größer 25 V bis 1000 V für Wechselspannungen von 15 bis 150 Hz. Für Bauteile, die Spannungen führen, die unter Klasse B fallen, sind gesonderte Maßnahmen zum Schutz vor direktem Kontakt und vor Fehlern in der Isolierung vorzusehen.

Für Spannungen von Klasse A ist kein gesonderter Berührschutz für Spannung führende Teile notwendig.

Batteriesysteme, wie sie z.B. in Hybridfahrzeugen oder elektrischen Fahrzeugen zum Einsatz kommen, haben häufig eine Ausgangsspannung > 60 V und fallen so in Klasse B oben genannter Norm.

Zur Erreichung dieser Spannung können Batteriesysteme als Reihenschaltungen von Spannungsquellen, wie beispielsweise Batteriezellen (NiCd, NiMH, Li-Ionen oder Li-Polymer) oder Kondensatoren (Supercaps, Ultracapacitors), genutzt werden.

Die Batteriesysteme können neben den Spannungsquellen auch noch Steuergeräte zur Batterieüberwachung u.ä. enthalten. Um diese zu tauschen oder zu warten muss das Batteriesystem gegebenenfalls geöffnet werden.

Da Batterie-Einzelzellen in teilgeladenem Zustand gelagert werden sollen und der Produktionsstandort der Zellen nicht zwangsläufig der Produktionsstandort des Batteriesystems ist, kann das Batteriesystem nicht spannungsfrei zusammengebaut werden. Es ist daher notwendig schon bei der Produktion des Batteriesystems einen erhöhten Aufwand zum Schutz vor elektrischen Spannungen vorzusehen.

Die US 5 886 501 A offenbart Batterieverbinder für Batteriepacks. Die Batteriepacks bestehen jeweils aus einer Vielzahl von Einzelbatterien die über Anschlüsse und Batterieverbinder in Reihe miteinander verbunden sind. Die Batterieverbinder umfassen Batterieverbinderbügel, welche an der Gehäuseabdeckung befestigt sind. Wird die Gehäuseabdeckung vom Gehäuseunterteil entfernt, werden die Batterieverbinder von den Anschlüssen der Batterien abgezogen, so dass die elektrische Verbindung zwischen den Einzelbatterien reversibel unterbrochen wird. Die Einzelbatterien sind in zwei Ebenen miteinander verbunden.

Aufgabe der vorliegenden Erfindung ist es, einen oder mehrere Nachteile des geschilderten Standes der Technik zu vermindern oder zu überwinden.

### Offenbarung der Erfindung

Die Aufgabe wird gelöst durch Bereitstellung eines Batteriesystem mit einer Ausgangsspannung von mehr als 60 V Gleichspannung,
umfassend
a) mindestens zwei Spannungsquellen mit einer Ausgangsspannung von jeweils weniger als 60 V, die jeweils mindestens einen Kontakt aufweisen, über den die Spannungsquellen durch reversibel unterbrechbare, leitende Verbindungen in Reihe schaltbar sind;
b) ein Batteriegehäuse in dem die mindestens zwei Spannungsquellen angeordnet sind;
c) mindestens eine reversibel unterbrechbare, leitende Verbindung, die derart funktional ausgestaltet ist, dass durch die leitende Verbindung bei geschlossenem Batteriegehäuse eine Reihenschaltung der mindestens zwei Spannungsquellen herstellbar ist und bei Öffnung des Batteriegehäuses eine Reihenschaltung der mindestens zwei Spannungsquellen reversibel unterbrechbar ist.

Der erfindungsgemäßen Lösung liegt die Idee zugrunde, in einem Batteriesystem die Reihenschaltung von Spannungsquellen so auszuführen, dass die Reihenschaltung reversibel, ggf. mechanisch, unterbrochen wird, wenn das Gehäuse des Batteriesystems z. B. für Wartungsarbeiten geöffnet wird, bzw. dass die Reihenschaltung erst nach Schließen des Batteriesystems im Produktionsprozess zu Stande kommt.

Dadurch kann für das Wartungs- und Montagepersonal auf gesonderte Schutzkleidung und besonders isoliertes Werkzeug verzichtet werden. Zudem wird das Risiko von Verletzungen durch Kontakt mit hohen elektrischen Spannungen drastisch reduziert.

Das erfindungsgemäße Batteriesystem weist eine Ausgangsspannung von mehr als 60 V Gleichspannung auf und ist grundsätzlich zur Versorgung jeder Art von elektrischem Verbraucher einsetzbar, der eine Versorgung mit elektrischer Energie einer solchen Ausgangsspannung benötigt.

Um die gewünschte Ausgangsspannung des Batteriesystems zu erreichen, enthält das Batteriesystem mehrere Spannungsquellen, die bei Betrieb des Batteriesystems in Reihe geschaltet vorliegen. Das erfindungsgemäße Batteriesystem umfasst mindestens zwei Spannungsquellen mit einer Ausgangsspannung von jeweils weniger als 60 V, die jeweils mindestens einen Kontakt aufweisen, über den die mindestens zwei Spannungsquellen durch mindestens eine leitende Verbindung in Reihe schaltbar sind. Eine Spannungsquelle kann dabei eine oder mehrere Batteriezellen oder Kondensatoren, beispielsweise Supercapacitors und/oder Ultracapacitors, enthalten. Unter einer Batteriezelle kann dabei jeder elektrochemische Energiespeicher verstanden werden, der eine Energie mittels elektrochemischer Prozesse speichert. Insbesondere sind darunter Akkumulator- und Batteriezellen der folgenden Typen zu verstehen. Bevorzugte elektrochemische Energiespeicher sind Brennstoffzellen, insbesondere vom Typ alkalische Brennstoffzelle (AFC), Polymerelektrolytbrennstoffzelle (PEMFC), Direktmethanolbrennstoffzelle (DMFC), Phosphorsäurebrennstoffzelle (PAFC), Schmelzkarbonatbrennstoffzelle (MCFC) und/oder Festoxidbrennstoffzelle (SOFC). Weitere bevorzugte elektrochemische Energiespeicher sind Akkumulatoren, insbesondere vom Typ Pb - Bleiakku, NiCd - Nickel-Cadmium-Akku, NiH2 - Nickel-Wasserstoff-Akkumulator, NiMH - Nickel-Metallhydrid-Akkumulator, Li-lon - Lithium-lonen-Akku, LiPo - Lithium-Polymer-Akku, LiFe - Lithium-Metall-Akku, Li-Mn - Lithium-Mangan-Akku, LiFePO₄ - Lithium-Eisen-Phosphat-Akkumulator, LiTi - Lithium-Titanat-Akku, RAM - Rechargeable Alkaline Manganese, Ni-Fe - Nickel-Eisen-Akku, Na/NiCl - Natrium-Nickelchlorid-Hochtemperaturbatterie-Batterie SCiB - Super Charge Ion Battery, Silber-Zink-Akku, Silikon-Akku, Vanadium-Redox-Akkumulator und/oder Zink-Brom-Akku.

Als Spannungsquellen werden Spannungsquellen mit einer Ausgangsspannung von weniger als 60 V eingesetzt. Dabei kann eine Spannungsquelle eine oder mehrere Batteriezellen umfassen. Umfasst eine Spannungsquelle mehrere Batteriezellen, so liegen diese bei Betrieb des Batteriesystems in Reihe geschaltet vor. Insbesondere kann eine Spannungsquelle mehr als eine Zelle eines Batterietyps umfassen.

Das erfindungsgemäße Batteriesystem kann mehr als zwei Spannungsquellen mit einer Ausgangsspannung von jeweils weniger als 60 V aufweisen. Dabei sind die Spannungsquellen im Batteriesystem derart funktional angeordnet, dass die Spannungsquellen durch reversibel unterbrechbare, leitende Verbindungen in Reihe schaltbar sind. Wenn die Einzelspannungsquellen in voll geladenem Zustand eine Spannung von kleiner einem n-ten Teil von 60 V bereitstellen, können Reihenschaltungen von bis zu n Spannungsquellen bei geöffnetem Batteriegehäuse zurückbleiben. Es kann jede Verbindung zwischen den einzelnen Spannungsquellen bei geöffnetem Gehäuse unterbrochen sein oder nur ausgewählte.

Das erfindungsgemäße Batteriesystem weist ein Batteriegehäuse auf, in dem die mindestens zwei Spannungsquellen angeordnet sind. Bevorzugt umgibt das Batteriegehäuse alle Spannungsquellen des Batteriesystems und isoliert diese im geschlossenen Zustand von der Umwelt. Die Spannungsquellen des Batteriesystems sind innerhalb des Batteriegehäuses positioniert und liegen bei geschlossenem Gehäuse in Reihe geschaltet vor. Das Batteriegehäuse weist Kontakte auf, die von außen zugänglich sind und die derart mit einem Verbraucher verbindbar ausgestaltet sind, dass dem Verbraucher elektrische Energie der Ausgangsspannung des Batteriesystems darüber zuleitbar ist. Insbesondere ist das Batteriegehäuse des erfindungsgemäßen Batteriesystems so ausgestaltet, dass die Reihenschaltung der Spannungsquellen durch mindestens eine leitende Verbindung reversibel unterbrechbar ist, bevor das Batteriegehäuse soweit geöffnet ist, dass mit einem Gegenstand (z.B. einem Schraubenzieher) in das Innere des Batteriegehäuses eingedrungen werden kann. Dazu kann das Batteriegehäuse öffenbare und/oder abnehmbare Teile aufweisen, die funktional und/oder direkt oder indirekt mechanisch mit einer leitenden Verbindung derart in Kontakt stehen, dass eine Reihenschaltung der Spannungsquellen reversibel unterbrochen wird, bevor das Gehäuseteil geöffnet und/oder abgenommen vorliegt. Das Batteriegehäuse kann mehrteilig aufgebaut sein und einen öffenbaren Deckel aufweisen. Insbesondere kann an einem öffenbaren Deckel des Batteriegehäuses eine Vorrichtung vorgesehen sein, die dafür sorgt, dass mindestens eine leitende Verbindung mit dem Deckel verbunden ist. Der Deckel und insbesondere die Vorrichtung des Deckels zum Verbinden des Deckels mit der leitenden Verbindung kann derart ausgestaltet sein, dass bei Öffnen des Deckels die Reihenschaltung der Spannungsquellen durch die mindestens eine leitende Verbindung reversibel unterbrechbar ist.

Die Spannungsquellen sind in mindestens zwei Ebenen im Batteriegehäuse angeordnet, wobei mindestens eine Ebene mehr als eine Spannungsquelle aufweist.

Das Batteriegehäuse kann neben den Spannungsquellen ggf. auch noch weitere Vorrichtungen wie beispielsweise Steuergeräte zur Batterieüberwachung u.ä. aufweisen oder enthalten.

Das erfindungsgemäße Batteriesystem weist mindestens eine leitende Verbindung auf, die derart funktional ausgestaltet ist, dass durch die reversibel unterbrechbare, leitende Verbindung bei geschlossenem Batteriegehäuse eine Reihenschaltung der mindestens zwei Spannungsquellen herstellbar ist und bei Öffnung des Batteriegehäuses eine Reihenschaltung der mindestens zwei Spannungsquellen reversibel unterbrechbar ist. Erfindungsgemäß sind die Spannungsquellen im Batteriegehäuse in mindestens zwei Ebenen angeordnet, wobei mindestens eine Ebene mehr als eine Spannungsquelle aufweist, wobei die Spannungsquellen der mindestens zwei Ebenen über mindestens eine reversibel unterbrechbare, leitende Verbindung in Reihe schaltbar sind, wobei die mindestens eine reversibel unterbrechbare, leitende Verbindung zwischen den mindestens zwei Ebenen gleichzeitig mit einer reversibel unterbrechbar, leitenden Verbindung zwischen den Spannungsquellen einer Ebene, bevorzugt der einem Deckel des Batteriegehäuses nächstliegenden Ebene, reversibel unterbrechbar ausgestaltet sind. Eine leitende Verbindung kann insbesondere dadurch reversibel unterbrechbar ausgestaltet sein, dass die Verbindung zwangsläufig bei Öffnen des Batteriegehäuses unterbrochen wird.

Dies kann beispielsweise dadurch erreicht werden, dass die reversibel unterbrechbare, leitende Verbindung als Steckverbindung ausgebildet ist und mindestens ein Teil der Steckverbindung derart funktional mit einem Gehäuseteil des Batteriesystems verbunden ist, dass die Steckverbindung beim Öffnen des Batteriegehäuses getrennt wird. Beispielsweise kann die reversibel unterbrechbare, leitende Verbindung als Steckverbindung ausgelegt werden, wobei der "männliche" Kontakt oder das Messer entweder an der Spannungsquelle (bzw. dem Ende der Reihenschaltung kleiner 60 V) selbst montiert sein kann und der "weibliche" Stecker mit dem Schließen des Gehäuses darauf gesteckt wird, oder aber der "weibliche" Stecker an der Spannungsquelle montiert ist und das "Messer" mit einem beim Öffnen des Gehäuses bewegten Teil verbunden ist. Bevorzugt ist ein Teil der Steckverbindung mit einem öffenbaren und/oder abnehmbaren Deckel des Batteriegehäuses verbunden.

Die reversibel unterbrechbare, leitende Verbindung kann auch als Pressverbindung ausgestaltet sein. Beispielhaft sei eine Verbindung genannt, die, durch das feste Montieren von Gehäusehälften (z.B. durch Verschrauben), auf die Pole/Kontakte der Spannungsquellen gepresst werden kann und beim Öffnen des Gehäuses, z.B. beim Lösen der Verschraubung von den Polen/Kontakten der Spannungsquellen entfernt werden kann.

Die reversibel unterbrechbare, leitende Verbindung kann auch als Schraubverbindung ausgestaltet sein. Beispielsweise können die Pole/Kontakte der Spannungsquellen als Gewindestab ausgelegt sein und ein Batteriegehäuseteil eine Anordnung enthält, die
i) eine leitende Verbindung,
ii) eine Schraubmutter und
iii) eine isolierende und gegebenenfalls abgedichtete Halterung der Schraubmutter, über die die Schraubmutter gedreht werden kann, umfasst.

Bevorzugt weist das erfindungsgemäße Batteriesystem mindestens eine reversibel unterbrechbare, leitende Verbindung auf, die als Steck-, Press - oder Schraubverbindung ausgestaltet ist.

Die vorliegende Erfindung umfasst auch einen elektrischen Verbraucher, der ein erfindungsgemäßes Batteriesystem enthält. Dabei kommt es nicht darauf an, dass Verbraucher und Batteriesystem eine bauliche Einheit bilden, sondern, dass Verbraucher und erfindungsgemäßes Batteriesystem derart funktional in Kontakt stehen, dass das Batteriesystem den Verbraucher mit elektrischer Energie versorgen kann. Insbesondere kann der Verbraucher ein Kraftfahrzeug sein. Dabei sind unter dem Begriff "Kraftfahrzeug" alle angetriebenen Fahrzeuge zu verstehen, die einen elektrochemischen Energiespeicher mit einer Ausgangsspannung von mehr als 60 V aufweisen, unabhängig davon welchen Antrieb diese Kraftfahrzeuge aufweisen. Insbesondere umfasst der Begriff "Kraftfahrzeug" HEV (elektrische Hybridfahrzeuge), PHEV (Plug-In-Hybridfahrzeuge), EV (Elektrofahrzeuge), Brennstoffzellenfahrzeuge, sowie alle Fahrzeuge, die einen elektrochemischen Energiespeicher für die elektrische Energieversorgung einsetzen.

### Figuren

- Fig. 1: zeigt eine Ausführungsform eines Batteriesystems mit geschlossenem Batteriegehäuse, zwischen den beiden äußersten Polen/Kontakten der Spannungsquellen liegt eine Spannung > 60 V an, diese Spannung ist geeignet aus dem Gehäuse herauszuführen.
- Fig. 2: zeigt eine Ausführungsform eines Batteriesystems mit teilgeöffnetem Gehäuse; die Reihenschaltung größer 60 V ist bereits aufgetrennt in Schaltungen kleiner 60 V, das Innere des Gehäuses ist noch nicht zugänglich.
- Fig. 3: zeigt eine Ausführungsform eines Batteriesystems mit komplett geöffnetem Gehäuse; das Innere ist zugänglich, alle berührbaren Spannungen sind kleiner 60 V.
- Fig. 4: zeigt eine weitere Ausführungsform des erfindungsgemäßen Batteriesystems als zweilagiges System bei geschlossenem Gehäuse, die Hochspannung ist zwischen dem äußersten rechten Kontakt der oberen und dem äußersten rechten Kontakt der unteren Lage abzugreifen und geeignet aus dem Gehäuse zu führen, die Verbindung zwischen den Lagen verbindet die linken Kontakte.
- Fig. 5: zeigt eine weitere Ausführungsform des erfindungsgemäßen Batteriesystems als zweilagiges System, bei Öffnen des Gehäuses werden die Verbindungen der ersten Lage und die Kontaktierung zur darunter liegenden Lage getrennt.
- Fig. 6: zeigt eine weitere Ausführungsform des erfindungsgemäßen Batteriesystems als zweilagiges System, bei Öffnen des Gehäuses werden die Verbindungen der ersten Lage und die Kontaktierung zur darunter liegenden Lage getrennt, wird die erste Lage abgenommen und somit die untere Lage zugänglich, werden die Verbindungen der unteren Lage getrennt.
- Fig. 7: zeigt eine Ausführungsform der reversibel unterbrechbaren, leitenden Verbindung als Pressverbindung.
- Fig. 8: zeigt eine weiter Ausführungsform der reversibel unterbrechbaren, leitenden Verbindung als Schraubverbindung.

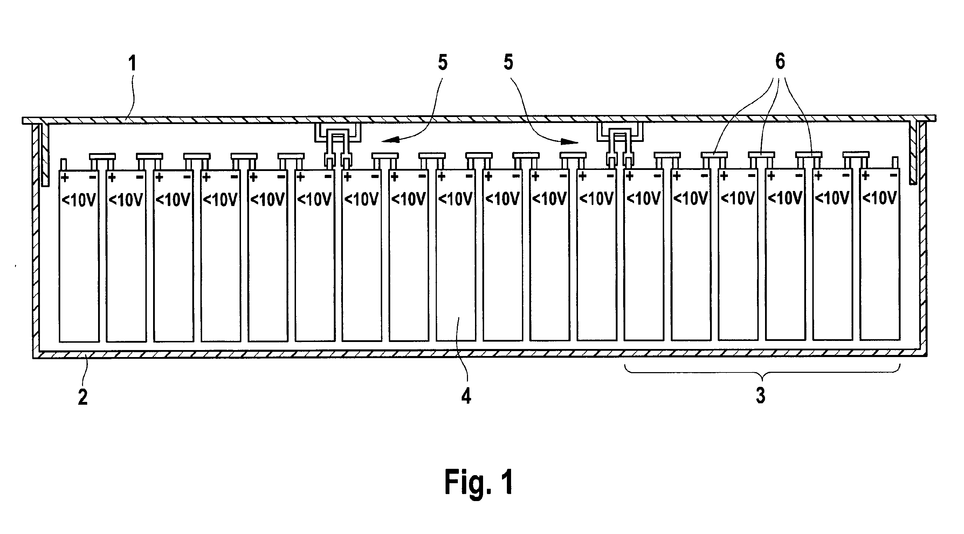

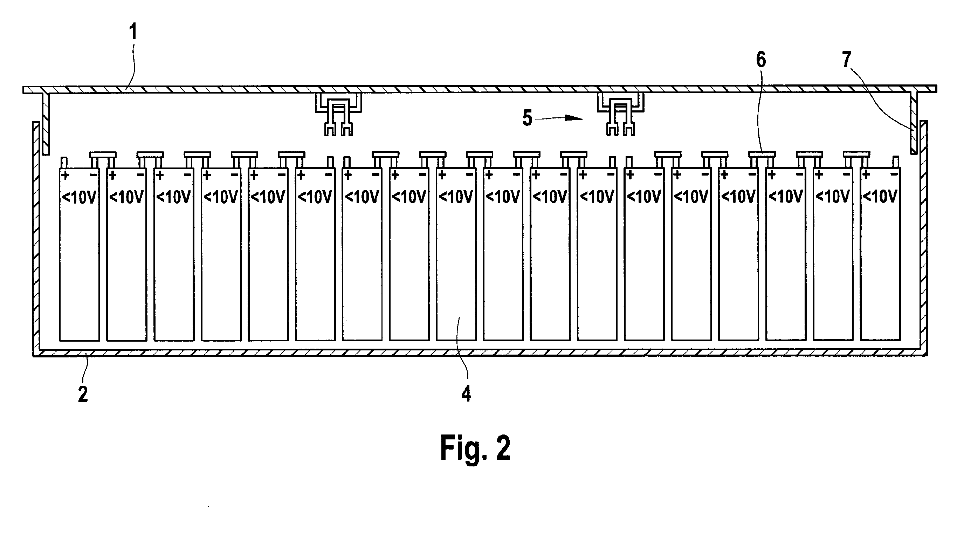

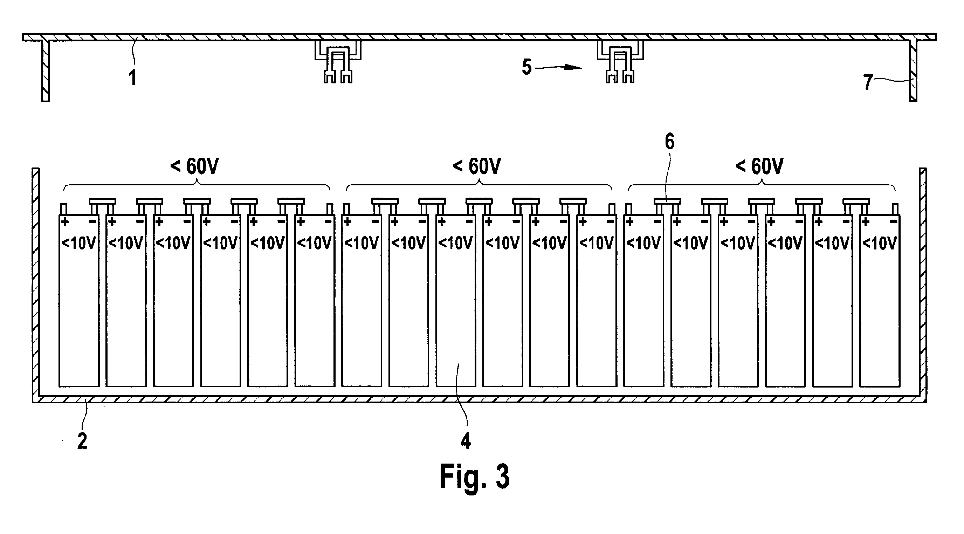

In Fig. 1 ist eine Ausführungsform eines Batteriesystems schematisch dargestellt. Das Batteriesystem weist ein mindestens zweiteiliges Batteriegehäuse auf, mit einem unteren Gehäuseteil 2, der die Spannungsquellen 3 aufnimmt und einem Gehäusedeckel 1. Das Batteriesystem ist in geschlossenem Zustand dargestellt, wobei der Deckel 1, der isoliert ist oder selbst elektrisch nicht leitend ist, auf dem unteren Gehäuseteil 2 aufliegt. Im unteren Gehäuseteil 2 sind drei Spannungsquellen 3 angeordnet, wobei jede der drei Spannungsquellen 3 jeweils sechs Batteriezellen 4 umfasst. Jede der Batteriezellen 4 weist eine Ausgangsspannung im voll geladenen Zustand von weniger als 10 V auf. Die sechs Batteriezellen 4 einer Spannungsquelle 3 liegen bereits in Reihe geschaltet vor. Die drei Spannungsquellen 3 sind über zwei reversibel unterbrechbare, leitende Verbindungen 5 miteinander verbunden und in Reihe geschaltet. Dabei sind die beiden reversibel unterbrechbaren, leitenden Verbindungen 5 als Steckverbindungen ausgebildet (mit dem "männlichen" Teil der Steckverbindung an der Stromquelle) und am Gehäusedeckel 1 befestigt.
Wird nun, wie in Fig. 2 dargestellt, der Deckel 1 vom unteren Gehäuseteil 2 angehoben, so wird die reversibel unterbrechbare, leitende Verbindung 5 unterbrochen, in dem der am Deckel 1 befestigte Verbindungsteil nach oben bewegt und der "männliche" Teil aus dem "weiblichen" Teil der Steckverbindung gezogen wird. Dabei wird die Reihenschaltung der Spannungsquellen 3 unterbrochen und es bleiben drei isolierte Spannungsquellen 3 zurück, die jeweils weniger als 60 V Ausgangsspannung aufweisen. Dabei ist der Deckel 1 so ausgestaltet, dass die reversibel unterbrechbaren, leitenden Verbindungen 5 unterbrochen werden, bei einer Gehäuseanordnung, bei der ein Eindringen in das Gehäuseinnere mit einem Gegenstand noch ausgeschlossen ist. Dazu kann der Deckel 1 beispielsweise seitliche, den Deckelrand umlaufende Stürze 7 aufweisen, die so dimensioniert sind, dass ein Eindringen in das Gehäuse erst möglich ist, wenn die leitenden Verbindungen 5 unterbrochen vorliegen.
Erst bei komplett geöffnetem Gehäuse, wie in Fig. 3 dargestellt, ist dann auch das Gehäuseinnere zugänglich, wobei die reversibel unterbrechbaren, leitenden Verbindungen 5 unterbrochen bleiben. Im unteren Gehäuseteil 2 sind nun keine berührbaren Teile mehr vorhanden, die eine Spannung von mehr als 60 V übertragen können. Das Batteriesystem kann gefahrlos gewartet werden.

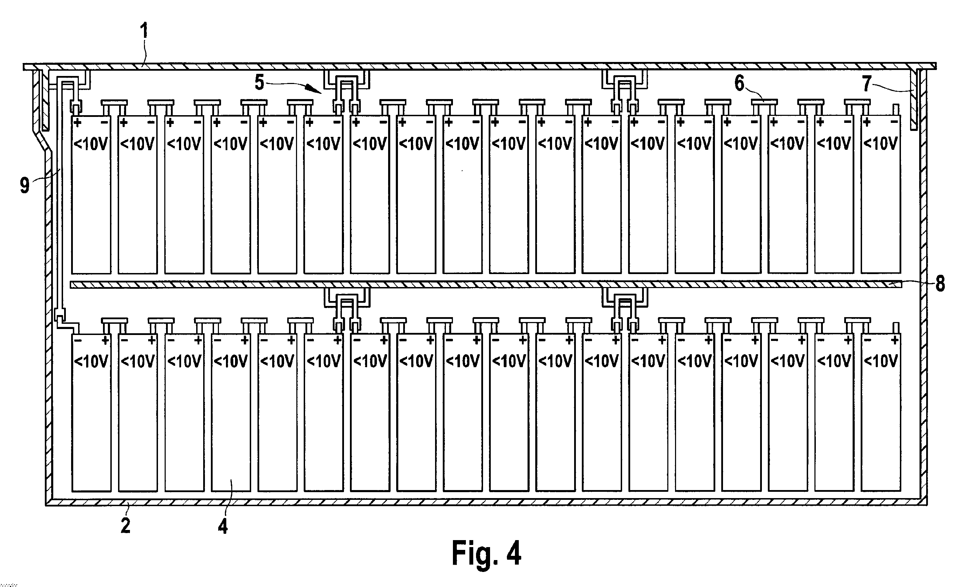

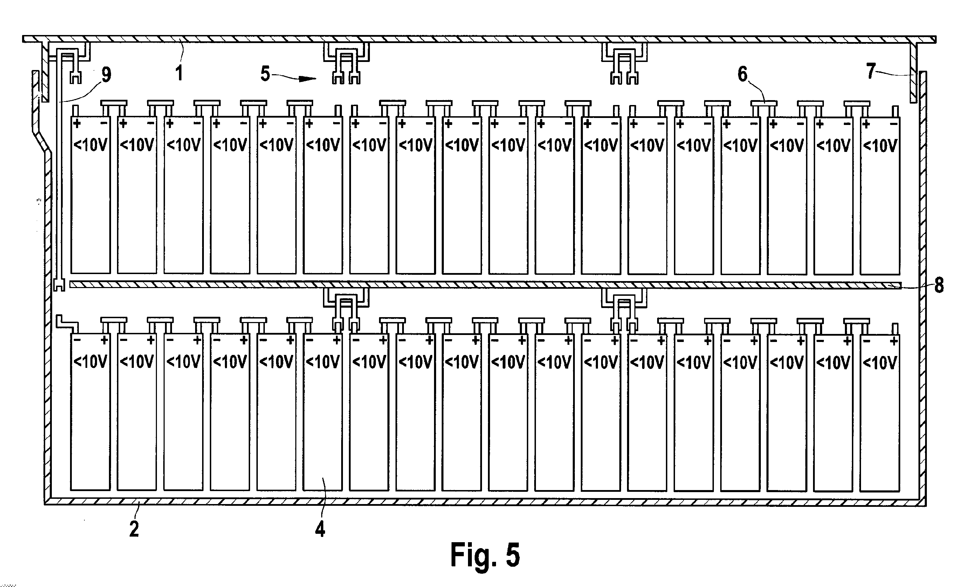

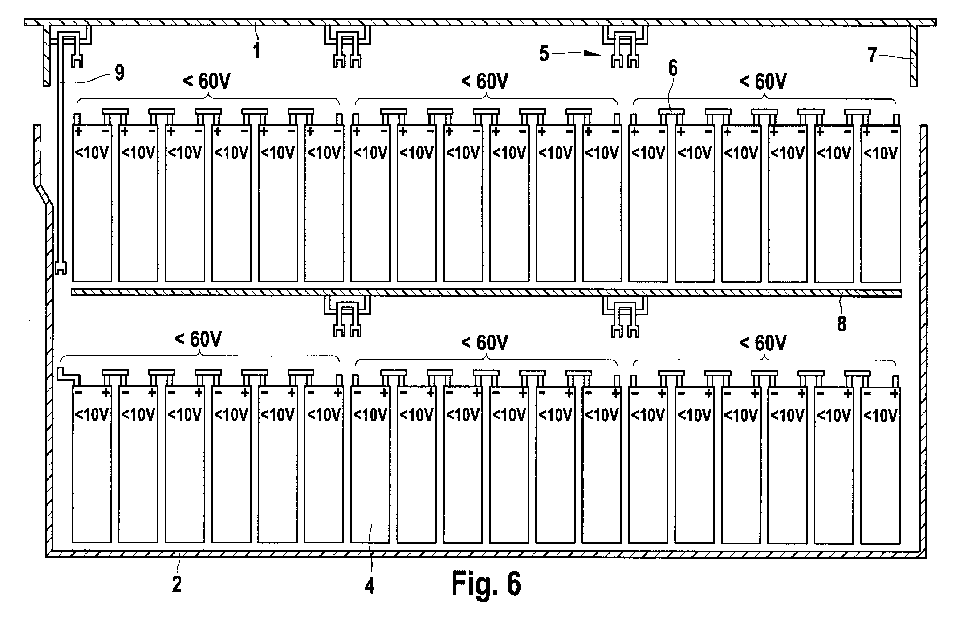

In Fig. 4 ist eine Ausführungsform des erfindungsgemäßen Batteriesystems schematisch dargestellt, bei der das Batteriesystem Spannungsquellen 3 in zwei Ebenen angeordnet aufweist. Im folgenden wird im Wesentlichen auf die Unterschiede zwischen der Ausführungsform der Fig. 1 bis 3 und der Ausführungsform der Fig. 4 bis 6 eingegangen. In geschlossenem Zustand des Batteriegehäuses liegen alle Spannungsquellen 3 des Batteriesystems in Reihe geschaltet vor. Reversibel unterbrechbare, leitende Verbindungen 5 sind sowohl am Deckel 1, als auch am Zwischenboden 8 des Batteriesystems befestigt. Wird nun, wie in Fig. 5 gezeigt, der Deckel 1 angehoben, so werden die reversibel unterbrechbaren, leitenden Verbindungen 5 zwischen den Spannungsquellen 3 der ersten Ebene getrennt, sowie die reversiel unterbrechbare, leitende Verbindung 9, die die beiden Ebenen leitend verbindet. Die Spannungsquellen 3 der unteren Ebene verbleiben zunächst noch in Reihenschaltung verbunden. Wenn, wie in Fig. 6 dargestellt, der Zwischenboden 8 des Batteriesystems angehoben wird, werden auch die reversibel unterbrechbaren, leitenden Verbindungen 5 der unteren Ebene unterbrochen. Es sind nun keine berührbaren Teile mehr vorhanden, die eine Spannung von mehr als 60 V übertragen können. Das Batteriesystem kann gefahrlos gewartet werden.

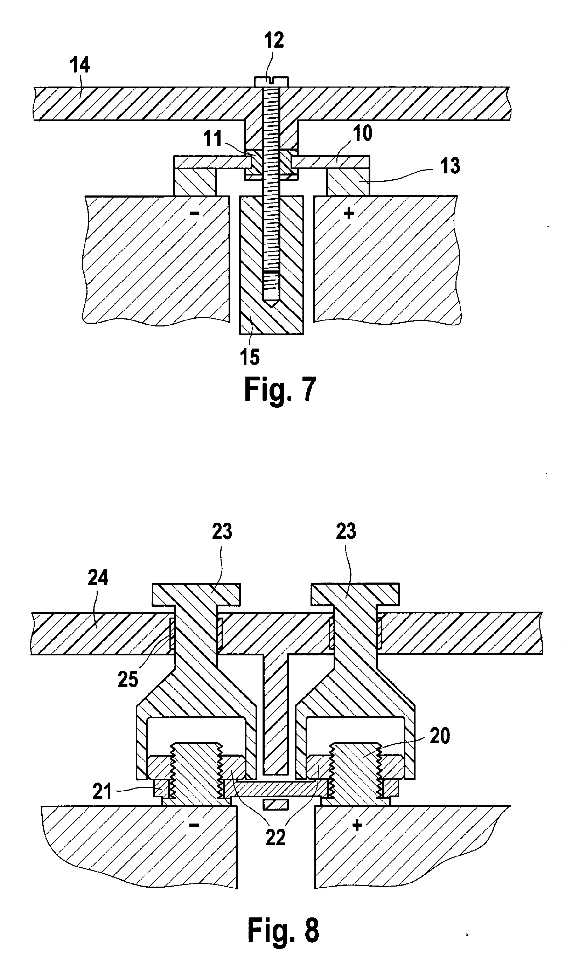

In Fig. 7 ist eine mögliche Ausführungsform einer reversibel unterbrechbaren, leitenden Verbindung als Pressverbindung dargestellt. Der leitende Verbinder 10 wird dabei durch eine isolierte Verschraubung (gebildet aus 11, 12. 14. 15) auf die Pole/Kontakte 13 der in Reihe zu schaltenden Spannungsquellen gepresst und verbindet diese dadurch leitend. Wird die isolierte Verschraubung (gebildet aus 11, 12. 14. 15) gelöst, wird der Kontakt zwischen dem leitenden Verbinder 10 und den Polen/Kontakten 13 der Spannungsquellen gelöst und die leitende Verbindung dadurch reversibel unterbrochen.

In Fig. 8 ist eine mögliche Ausführungsform einer reversibel unterbrechbaren, leitenden Verbindung als Schraubverbindung dargestellt. Die Pole/Kontakte 20 der zu verbindenden Spannnungsquellen sind dabei als Gewindestangen ausgebildet. Der leitende Verbinder 21 wird mit den Polen 20 in Kontakt gebracht und mit Gewindemuttern 22 fixiert. Die Gewindemuttern 22 sind über Mutterhalter von außerhalb des Gehäuses drehbar ausgestaltet. Durch Lösen der Gewindemuttern 22 wird die reversibel unterbrechbare, leitende Verbindung unterbrochen, durch Anziehen der Gewindemuttern 22 wird die Verbindung wieder hergestellt.

## Patentansprüche

1. Batteriesystem mit einer Ausgangsspannung von mehr als 60 V Gleichspannung, umfassend
a) mindestens zwei Spannungsquellen mit einer Ausgangsspannung von jeweils weniger als 60 V, die jeweils mindestens einen Kontakt aufweisen, über den die Spannungsquellen durch reversibel unterbrechbare, leitende Verbindungen in Reihe schaltbar sind;
b) ein Batteriegehäuse in dem die mindestens zwei Spannungsquellen angeordnet sind;
c) mindestens eine reversibel unterbrechbare, leitende Verbindung, die derart funktional ausgestaltet ist, dass durch die leitende Verbindung bei geschlossenem Batteriegehäuse eine Reihenschaltung der mindestens zwei Spannungsquellen herstellbar ist und bei Öffnung des Batteriegehäuses eine Reihenschaltung der mindestens zwei Spannungsquellen reversibel unterbrochen wird,
wobei die Spannungsquellen in mindestens zwei Ebenen im Batteriegehäuse angeordnet sind, wobei mindestens eine Ebene mehr als eine Spannungsquelle aufweist,
**dadurch gekennzeichnet, dass**
die Spannungsquellen der mindestens zwei Ebenen über mindestens eine reversibel unterbrechbare, leitende Verbindung in Reihe schaltbar sind und dass die mindestens eine reversibel unterbrechbare, leitende Verbindung zwischen den mindestens zwei Ebenen gleichzeitig mit einer reversibel unterbrechbaren, leitenden Verbindung zwischen den Spannungsquellen einer Ebene reversibel unterbrechbar ausgestaltet ist.

2. Batteriesystem nach Anspruch 1,
**dadurch gekennzeichnet, dass**
mindestens eine der Spannungsquellen mit einer Ausgangsspannung von weniger als 60 V mehr als eine Zelle eines Batterietyps umfasst, wobei die Zellen einer Spannungsquelle in Reihe geschaltet vorliegen.

3. Batteriesystem nach einem der vorhergehenden Ansprüche,
**dadurch gekennzeichnet, dass**
das Batteriesystem mehr als zwei Spannungsquellen mit einer Ausgangsspannung von jeweils weniger als 60 V aufweist, die derart funktional angeordnet sind, dass die Spannungsquellen durch reversibel unterbrechbare, leitende Verbindungen in Reihe schaltbar sind.

4. Batteriesystem nach einem der vorhergehenden Ansprüche,
**dadurch gekennzeichnet, dass**
das Batteriegehäuse derart funktional ausgeführt ist, dass die Reihenschaltung der Spannungsquellen durch mindestens eine reversibel unterbrechbare, leitende Verbindung reversibel unterbrechbar ist, bevor das Batteriegehäuse soweit geöffnet ist, dass in das Batteriegehäuseinnere mit einem Gegenstand eingedrungen werden kann.

5. Batteriesystem nach einem der vorhergehenden Ansprüche,
**dadurch gekennzeichnet, dass**
das Batteriegehäuse mindestens zweiteilig aufgebaut ist und einen öffenbaren Deckel aufweist, wobei mindestens eine reversibel unterbrechbare, leitende Verbindung derart mit dem Deckel verbunden ist, dass bei Öffnung des Deckels die Reihenschaltung der Spannungsquellen durch die mindestens eine reversibel unterbrechbare, leitende Verbindung reversibel unterbrechbar ist.

6. Batteriesystem nach einem der vorhergehenden Ansprüche,
**dadurch gekennzeichnet, dass**
mindestens eine reversibel unterbrechbare, leitende Verbindung als Steck-, Press- oder Schraubverbindung ausgestaltet ist.

7. Verbraucher enthaltend ein Batteriesystem nach einem der Ansprüche 1 bis 6.

8. Verbraucher nach Anspruch 7,
**dadurch gekennzeichnet, dass**
der Verbraucher ein Kraftfahrzeug ist.

## Claims

1. Battery system having an output voltage of more than 60 V DC voltage, comprising
a) at least two voltage sources having an output voltage of in each case less than 60 V, which each have at least one contact by means of which the voltage sources can be connected in series by conductive connections which can be reversibly interrupted;
b) a battery housing in which the at least two voltage sources are arranged;
c) at least one conductive connection which can be reversibly interrupted and is functionally designed in such a way that a series connection between the at least two voltage sources can be established by the conductive connection when the battery housing is closed and a series connection between the at least two voltage sources is reversibly interrupted when the battery housing is opened,
wherein the voltage sources are arranged in at least two levels in the battery housing, wherein at least one level has more than one voltage source,
**characterized in that**
the voltage sources of the at least two levels can be connected in series by means of at least one conductive connection which can be reversibly interrupted, and
**in that** the at least one conductive connection, which can be reversibly interrupted, between the at least two levels is designed such that it can be reversibly interrupted at the same time as a conductive connection, which can be reversibly interrupted, between the voltage sources of one level.

2. Battery system according to Claim 1,
**characterized in that**
at least one of the voltage sources with an output voltage of less than 60 V comprises more than one cell of one battery type, wherein the cells of a voltage source are connected in series.

3. Battery system according to either of the preceding claims,
**characterized in that**
the battery system has more than two voltage sources with an output voltage of in each case less than 60 V, which voltage sources are functionally arranged in such a way that the voltage sources can be connected in series by conductive connections which can be reversibly interrupted.

4. Battery system according to one of the preceding claims,
**characterized in that**
the battery housing is functionally designed in such a way that the series connection between the voltage sources can be reversibly interrupted by at least one conductive connection, which can be reversibly interrupted, before the battery housing is opened to such an extent that an object can be inserted into the battery housing interior.

5. Battery system according to one of the preceding claims,
**characterized in that**
the battery housing is constructed from at least two parts and has a cover which can be opened, wherein at least one conductive connection which can be reversibly interrupted is connected to the cover in such a way that the series connection between the voltage sources can be reversibly interrupted by the at least one conductive connection, which can be reversibly interrupted, when the cover is opened.

6. Battery system according to one of the preceding claims, **characterized in that** at least one conductive connection which can be reversibly interrupted is designed as a plug, press-fit or screw connection.

7. Load containing a battery system according to one of Claims 1 to 6.

8. Load according to Claim 7,
**characterized in that**
the load is a motor vehicle.

## Revendications

1. Système de batterie dont la tension de sortie est une tension continue de plus de 60 V et comprenant :
a) au moins deux sources de tension dont la tension de sortie est chaque fois inférieure à 60 V et qui présentent chacune au moins un contact par lequel les sources de tension peuvent être commutées en série par des liaisons conductrices aptes à être rompues de manière réversible,
b) un boîtier de batterie dans lequel les deux ou plusieurs sources de tension sont disposées,
c) au moins une liaison conductrice apte à être rompue de manière réversible et configurée fonctionnellement de telle sorte qu'un circuit série formé par les deux ou plusieurs sources de tension peut être établi par la liaison conductrice lorsque le boîtier de batterie est fermé et que le circuit série formé des deux ou plusieurs sources de tension soit rompu de manière réversible lorsque le boîtier de batterie est ouvert,
les sources de tension étant disposées en au moins deux plans du boîtier de batterie, au moins un plan présentant plus d'une source de tension,
**caractérisé en ce que**
les sources de tension des deux ou plusieurs plans peuvent être raccordées en série par l'intermédiaire d'au moins une liaison conductrice apte à être rompue de manière réversible et
**en ce que** la ou les liaisons conductrices aptes à être rompues de manière réversible entre les deux ou plusieurs plans sont configurées de manière à pouvoir être rompues de manière réversible avec une liaison conductrice apte à être rompue de manière réversible entre les sources de tension d'un plan.

2. Système de batterie selon la revendication 1, **caractérisé en ce qu'**au moins l'une des sources de tension dont la tension de sortie est inférieure à 60 V comporte plus d'une cellule d'un type de batterie, les cellules d'une source de tension étant raccordées en série.

3. Système de batterie selon l'une des revendications précédentes, **caractérisé en ce que** le système de batterie présente plus de deux sources de tension dont la tension de sortie est chaque fois inférieure à 60 V et qui sont disposés fonctionnellement de telle sorte que les sources de tension puissent être raccordées en série par des liaisons conductrices aptes à être rompues de manière réversible.

4. Système de batterie selon l'une des revendications précédentes, **caractérisé en ce que** le boîtier de batterie est réalisé fonctionnellement de telle sorte que le circuit série formé des sources de tension puisse être rompu de manière réversible par au moins une liaison conductrice apte à être rompue de manière réversible avant que le boîtier de batterie soit suffisamment ouvert pour qu'un objet puisse pénétrer à l'intérieur du boîtier de batterie.

5. Système de batterie selon l'une des revendications précédentes, **caractérisé en ce que** le boîtier de batterie est constitué en au moins deux pièces et présente un couvercle apte à être ouvert, au moins une liaison conductrice apte à être rompue de manière réversible étant reliée au couvercle de telle sorte que lorsque le couvercle est ouvert, le circuit série formé par les sources de tension puisse être rompu de manière réversible par la ou les liaisons conductrices aptes à être rompues de manière réversible.

6. Système de batterie selon l'une des revendications précédentes, **caractérisé en ce qu'**au moins une liaison conductrice apte à être rompue de manière réversible est configurée comme liaison enfichable, liaison pressée ou liaison vissée.

7. Consommateur contenant un système de batterie selon l'une des revendications 1 à 6.

8. Consommateur selon la revendication 7, **caractérisé en ce que** le consommateur est un véhicule automobile.
